(19) Europäisches Patentamt European Patent Office Office européen des brevets

(11) **EP 4 462 714 A1**

(12) **EUROPEAN PATENT APPLICATION**

(43) Date of publication:
**13.11.2024 Bulletin 2024/46**

(21) Application number: **24174037.2**

(22) Date of filing: **03.05.2024**

(51) International Patent Classification (IPC):
**H04L 5/00** (2006.01)      **H04L 1/1812** (2023.01)
**H04L 1/1829** (2023.01)

(52) Cooperative Patent Classification (CPC):
**H04L 5/0055; H04L 1/1812; H04L 1/1861**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.05.2023  IN 202321031902**
**15.04.2024  US 202418635603**

(71) Applicant: **Mavenir Systems, Inc.**
**Richardson, TX 75081 (US)**

(72) Inventors:
• **Chandran, Ramesh**
**560102 Bangalore (IN)**

• **Jena, Hari Shankar**
**560064 Chokkanhalli (IN)**
• **Leelahakriengkrai, Rangsan**
**Allen, 75013 (US)**
• **Lourdu Raja, Charles Santhosam**
**Bangalore, 560048 (US)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **IMPROVING DOWNLINK THROUGHPUT OF 5G NR USING PUCCH HARQ RESOURCE ASSIGNMENT**

(57)    A Radio Access Network (RAN) system includes a group of cell sites where each cell site includes multiple sectors, and each sector communicates with UE, the system including a Radio Resource Controller (RRC) in Central Unit (CU) controlling PUCCH resources for the sectors, and a Media Access Control (MAC) Scheduler in each sector allocating resources for PUCCH HARQ transmissions in an orthogonal manner separated in time or frequency or cyclic shift to minimize the inter-carrier interference across the sectors to improve system throughput.

| gNB (Downlink slots) | Slot N-4 | Slot N-3 | Slot N-2 | Slot N-1 | Slot N | Slot N+1 | Slot N+2 | Slot N+3 | Slot N+4 | Slot N+5 | Slot N+6 |
|---|---|---|---|---|---|---|---|---|---|---|---|
| | | | | DL Transmission | | | | HARQ Status | | | |
| UE (Uplink Slots) | Slot N-4 | Slot N-3 | Slot N-2 | Slot N-1 | Slot N | Slot N+1 | Slot N+2 | Slot N+3 | Slot N+4 | Slot N+5 | Slot N+6 |
| | | | | | | K1 Slots Delay | | | | | |

**FIG. 1**

Prior Art

EP 4 462 714 A1

**Description**

BACKGROUND

1. Field of the Invention

The present disclosure relates to systems and methods to improve the detectability of Hybrid Automatic Repeat reQuest (HARQ) transmission in Physical Uplink Control Channel (PUCCH), which increases the DownLink (DL) throughput of the system.

2. Description of Related Art

Physical Uplink Control Channel (PUCCH) Hybrid Automatic Repeat reQuest (HARQ) resources are used to carry Acknowledgement (ACK) / Negative Acknowledgement (NACK) status for Downlink transmission with the predefined timing offset of K1 slots. An ACK or NACK is a short message sent by a receiver to a transmitter to indicate whether it has correctly or incorrectly received a data packet, respectively.

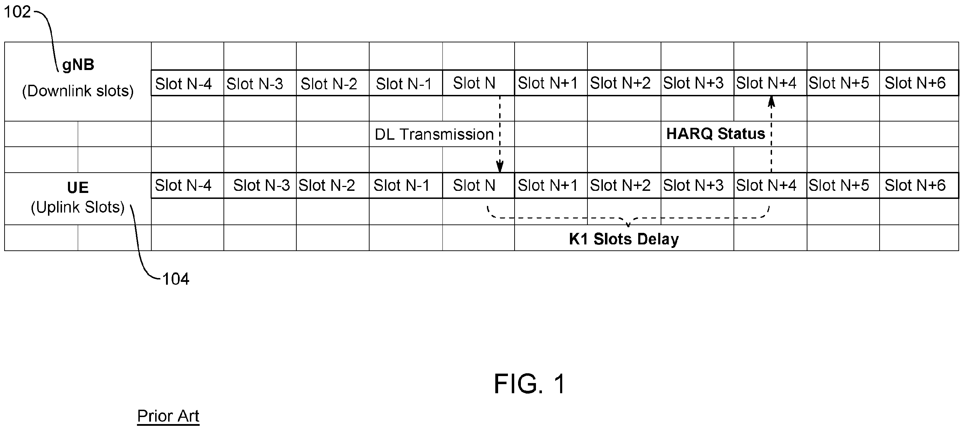

In a typical Frequency Division Duplexing (FDD) based configuration, the number of HARQ resources in PUCCH in an UpLink (UL) slot is based on the number of DL scheduled users in a Transmit Time Interval (TTI). The procedure for PUCCH HARQ transmission for DL transmission is illustrated, for example, in FIG. 1.

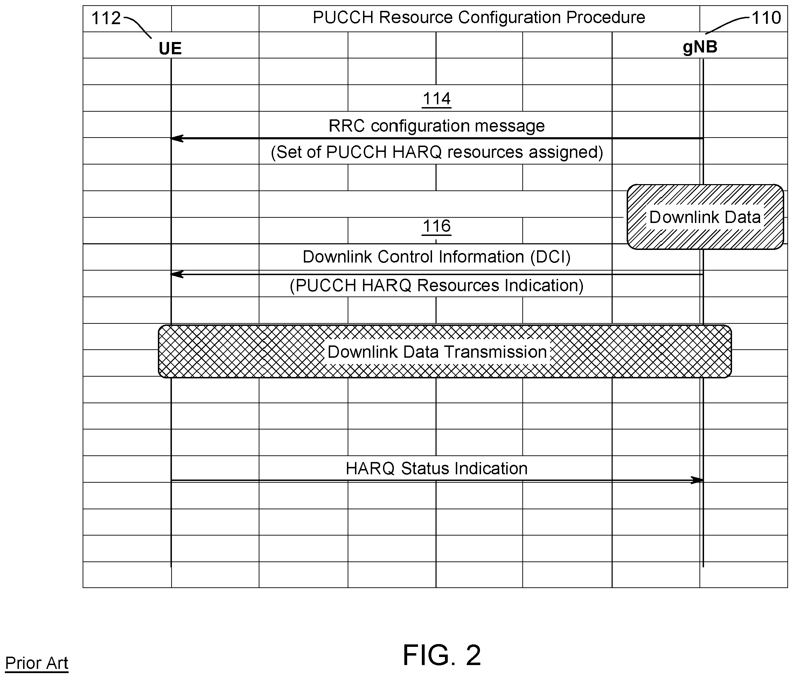

As part of the PUCCH resource allocation procedure, the possible set of HARQ resources assigned to User Equipment (UE) in a Radio Resource Control (RRC) configuration message while the UE is attached and an exact HARQ resource, is indicated in the PUCCH resource indicator field of Downlink Control Information (DCI) 1_0 / 1_1. This procedure is illustrated in FIG. 2. UE will use this indicated resource to transmit the HARQ status information in the PUCCH for every Physical Downlink Shared Channel (PDSCH) transmission.

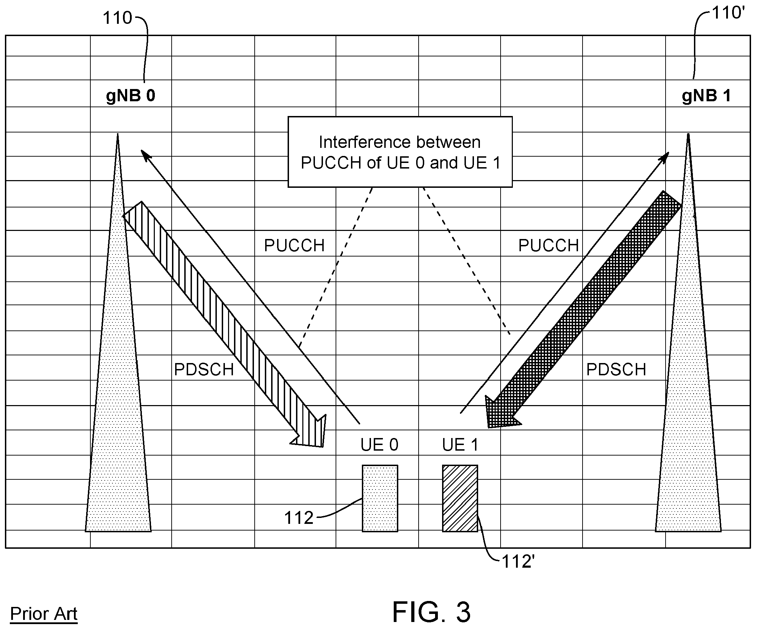

It has been observed that there is a significant degradation in DL throughput due to reception of PUCCH Discontinuous Transmission (PUCCH DTX) or NACK when Inter-cell Interference (ICI) is present across UE coupled to nearby sectors, which is illustrated in the configuration shown in FIG. 3. Typically, these issues are prevalent in cell edge scenarios.

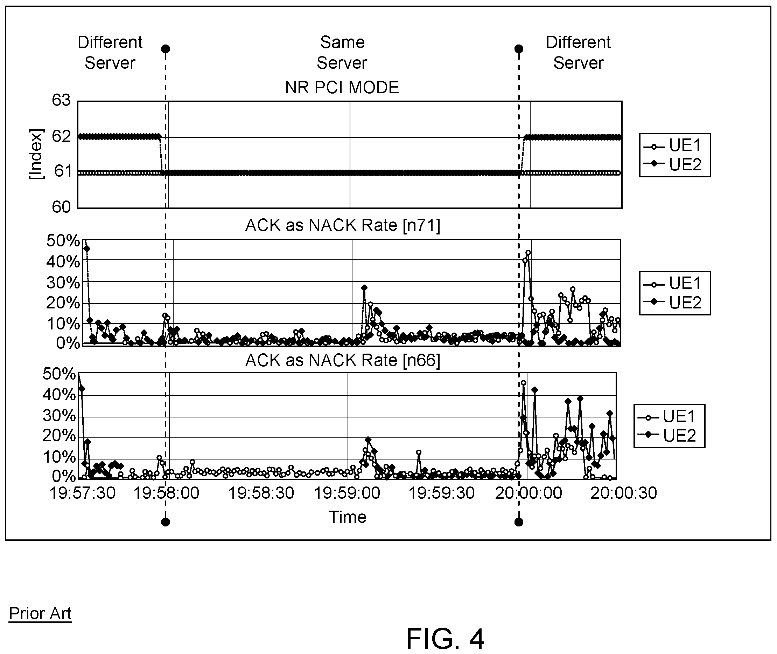

Observations of PUCCH interference caused by PUCCH resource collision across sectors are illustrated in the chart depicted in FIG. 4. Notably, FIG. 4 illustrates that many NACKs are received when UE utilize PUCCH resources and cyclic shifts that are allocated in the same Resource Blocks across cells. In these situations, the percentage of PUCCH NACK / DTX detection for UEs has been observed to increase by as much as 40% causing Downlink throughput to significantly degrade. To improve throughput in Downlink, it is important to increase the PUCCH HARQ detection probability. However, current methods and system configurations do not allow for increased PUCCH HARQ detection probability.

Based on existing designs, PUCCH HARQ resources are assigned across sectors in the same frequency locations and use the same cyclic shifts. Additionally, PUCCH Format 0 resources are used to transmit HARQ information. As per 3GPP specifications, PUCCH Format 0 resources are configured to the UE by the higher layers, where configuration parameters include *initialCyclicShift, nrOfSymbols, startingPRB* and *StartSymbol* indexes. Combinations of these parameters indicate unique HARQ F0 resources are separated by Time / Frequency / Code domain. Typically, these higher-layer configured parameters are sent to the UE through an RRC message during UE attachment.

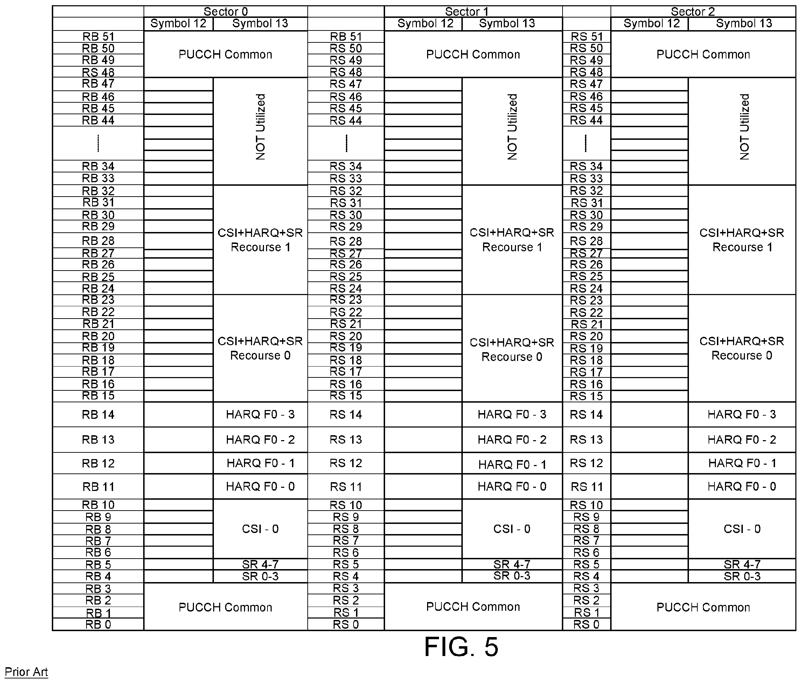

The existing design of time and resource mapping of PUCCH HARQ resources for a 10 MHz bandwidth system is given in FIG. 5. Start Resource Block index for HARQ F0 resources (Resource Block #11) is maintained the same across sectors 0, 1 and 2. This configuration will cause severe interference in UL reception of PUCCH and degradation in overall system performance as was noted in FIG. 4.

The above-described problem can be mitigated to a limited extent by positioning PUCCH HARQ resources in different time positions in a slot in different sectors so that they do not interfere with each other. Different Time positions in a slot refers to: allocating PUCCH HARQ resources in a different symbol within a slot (but this solution is not optimal because interference can still occur from nearby cell PUSCH). In other words, the PUCCH can still be interfered with from the Physical Uplink Shared Channel (PUSCH) from other sectors. Additionally, it requires strict resource planning for PUCCH transmission to maximize the number of Resource Blocks or Resource Elements for PUSCH transmission, which is difficult to achieve.

Accordingly, there is a need for a system that overcomes, alleviates, and/or mitigates one or more of the aforementioned and other deleterious effects of the prior art.

SUMMARY

Accordingly, what is needed is a system and method that avoids PUCCH HARQ interference with nearby sectors.

It is further desired to provide a system and method for allocating PUCCH HARQ resources for a sector that is separated by Frequency or Cyclic Shift from nearby sectors.

It is still further desired to provide a system and method that configures a Physical Resource Block (PRB) index with an offset for PUCCH HARQ resources and/or Cyclic Shift Index for each sector based on Physical Cell Identity (PCI).

It also desired to provide a system and method that avoids configuring PUCCH HARQ resources on the same PRB and/or Cyclic Shift index in a PUCCH symbol for nearby sectors to avoid interference in HARQ decoding at an evolved Node B / Next Generation Node B (eNB/gNB) system.

Accordingly, in one configuration, a method is provided that facilitates allocation of PUCCH HARQ resources for a sector that is separated by frequency and/or cyclic shift with the nearby sectors. This allows for avoidance of PUCCH HARQ interference with the nearby sectors. The system configures the PRB index with an offset for PUCCH HARQ resources and/or cyclic shift index for each sector based on PCI. This ensures that orthogonal transmission is maintained across nearby sectors.

It was previously stated that the problem identified in FIGS. 4 and 5, could be slightly mitigated by positioning PUCCH HARQ resources in different time positions in a slot in different sectors so that they do not interfere with each other and that different time positions in a slot refers to: allocating PUCCH HARQ resources in a different symbol within a slot. This is a suboptimal solution due to interference from nearby cell PUSCH.

In contrast, the proposed solution considers the one particular symbol in a slot reserved for PUCCH HARQ transmission, which will not be used for PUSCH in any cells. That symbol in a slot will be shared among nearby cells.

For example, the former case is:

Cell 0 - Symbol *a* in slot 0,
Cell 1 - Symbol *b* in slot 0,
Cell 2 - Symbol *c* in slot 0, and so on.

In contrast, the proposed approach is as follows:

Cell 0 - Symbol *x* in slot 0
Cell 1 - Symbol *x* in slot 1,
Cell 2 - Symbol *x* in slot 2, and so on.

As can be seen, the previous approach utilized different symbols in the same slot in different cells, whereas, the present approach may utilize the same symbol in different slots in different cells.

For this application the following terms and definitions shall apply:

The term network as used herein includes both networks and internetworks of all kinds, including the Internet, and is not limited to any particular type of network or inter-network.

The terms first and second are used to distinguish one element, set, data, object or thing from another, and are not used to designate relative position or arrangement in time.

The terms coupled, coupled to, coupled with, connected, connected to, and connected with as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term Automatic Repeat reQuest (ARQ) as used herein is a transmission protocol used in communication systems, including LTE networks, to ensure the reliable delivery of data. It is a method for detecting and correcting errors that may occur during data transmission. ARQ works by requiring a receiver to send an acknowledgment (ACK) (message sent by the receiver indicating that it has correctly received a message) and timeouts (time periods allowed to elapse before an acknowledgment is to be received). If the receiver detects errors in the data packet, it sends a negative acknowledgment message to the sender, indicating that the packet needs to be retransmitted.

The term Hybrid Automatic Repeat reQuest (HARQ) as used herein is a communication protocol that allows the sender to detect and correct errors in transmitted data. It is a combination of high-rate forward error correction (FEC) and automatic repeat request (ARQ) error-control and works by using a combination of retransmissions and error correction codes to ensure that the data is transmitted and received correctly. HARQ enables faster recovery from errors in cellular networks by storing corrupted packets in the receiving device rather than discarding them. A sender will only retransmit the erroneous bits or packets of information not properly received.

The term Forward error correction (FEC) or channel coding as used herein is a technique used for controlling errors in data transmission over a communication channel.

The term Block Error Rate (BLER) as used herein is a ratio of the number of erroneous blocks to the total number of blocks transmitted on a digital circuit.

The term DownLink (DL) as used herein is data flow towards the radiating antenna.

The term UpLink (UL) as used herein is data flow away from the radiating antenna.

The term O-RAN Control Unit (CU) as used herein is a logical node hosting PDCP, RRC, SDAP and other control functions.

The term O-RAN Distributed Unit (DU) as used herein is a logical node hosting RLC/MAC/High-PHY layers based on a lower layer functional split.

The term O-RAN Radio Unit (RU) as used herein is a logical node hosting Low-PHY layer and RF processing based on a lower layer functional split. This is similar to 3GPP's "TRP" or "RRH" but more specific in including the Low-PHY layer (FFT/iFFT, PRACH extraction).

The term Third generation partnership project (3GPP) as used herein is a partnership of seven telecommunications standard development organizations that produces reports and specifications for mobile networks.

The term g NodeB (gNB) as used herein is the radio base station in 5G NR networks. These radio base stations (nodes) are the cell towers mobile operators use to connect mobile phones.

The term User Equipment (UE) as used herein refers to the end-user device that connects to a wireless network to access various services and applications.

The term Radio Resource Control (RRC) as used herein is a vital protocol in mobile communication networks that manages the establishment, maintenance, and release of radio connections between mobile devices and the network. It also ensures efficient utilization of radio resources, facilitates mobility management, and optimizes network performance to provide reliable communication services to users.

The term Physical Uplink Control Channel (PUCCH) as used herein is a channel that is designed to carry UCI (Uplink Control Information).

The term Physical Uplink Share Channel (PUSCH) as used herein is a channel responsible for carrying user data from the User Equipment (UE) to the base station.

The term Physical Downlink Control Channel (PDCCH) as used herein is a channel that controls the transmission and reception of UL and DL data by transmitting Downlink Control Information (DCI).

The term Radio Access Network (RAN) as used herein is the part of a communications system that traditionally connects cellular wireless capable (e.g., 4G LTE, 5G) devices back to a public and / or private mobile core network via an existing network backbone.

The term Physical Resource Block (PRB) as used herein is a block made up of 12 consecutive subcarriers.

The term Reference Signal Receiving Power (RSRP) as used herein represents the power level of the DL reference signals transmitted by a 5G base station as received by the user equipment (UE) or device.

The term Signal to Interference plus Noise Ratio (SINR) as used herein measures the ratio of the received signal power to the sum of interference and noise power.

In one configuration, a cellular communication system is provided comprising: a group of cell sites, each has 1, 2, 3 or 4 sectors, communicating with the set of User Equipment, and a Radio Resource Controller (RRC) in a Control Unit-Control Plane (CU-CP) controlling the PUCCH resources for the sectors in all sites. The system further comprises a Media Access Control (MAC) Scheduler in each sector that allocates resources for PUCCH HARQ transmissions in an orthogonal way, which are separated in Time and/or frequency and/or Cyclic shift to minimize Inter-Carrier Interference across the sectors.

In another configuration, a Radio Access Network (RAN) system is provided comprising: a radio unit (RU) coupled to a plurality of user equipment (UE), the RU having a plurality of sectors, and a radio resource controller (RRC) in a control unit (CU) server controlling physical uplink control channel (PUCCH) resources for the plurality of sectors. The system further comprises: a media access control (MAC) scheduler for each of the plurality of sectors allocating resources for PUCCH hybrid automatic repeat request (HARQ) transmissions in an orthogonal manner, which are separated in time, frequency or cyclic shift to minimize the inter-carrier interference across the plurality of sectors.

The above-described and other features and advantages of the present disclosure will be appreciated and understood by those skilled in the art from the following detailed description, drawings, and appended claims.

DESCRIPTION OF THE DRAWINGS

FIG. 1 illustrates HARQ transmission procedures in a 5G NR system according to the prior art;

FIG. 2 illustrates a method for configuring HARQ resources according to the prior art;

FIG. 3 illustrates the known implementation deployed, which creates significant interference in PUCCH transmission according to prior art systems;

FIG. 4 illustrates PUCCH interference in prior art systems;

FIG. 5 illustrates known time and resource mapping design for PUCCH HARQ resources comprising a 10 MHz bandwidth system in prior art systems;

FIG. 6 illustrates a Radio Access Network (RAN) according to one configuration of the present invention;

FIG. 7 illustrates a centralized Radio Resource Management (RRM) module controlling resource allocation across a sector in a RAN according to the system of FIG. 6;

FIG. 8 illustrates PUCCH HARQ Resource Block and Cyclic index shifting for sectors Alpha, Beta and Gamma according to the system and method of FIG. 7;

FIG. 9 illustrates the implementation of the system and method according to FIGS. 7 & 8 in a typical cell site configuration; and

FIG. 10 illustrates the HARQ resource assignment according to the system and method of FIGS. 6-9 in connection with a 5 MHz system.

DETAILED DESCRIPTION

Referring now to the drawings, wherein like reference numerals designate corresponding structure throughout the views.

Referring now to FIG. 1, HARQ transmission procedures in a 5G NR system are illustrated for gNB DL slots 102 and UE UL slots 104. For each PDSCH transmission, HARQ resources are allocated where UE will transmit ACK status for PDSCH using the assigned HARQ resources.

PUCCH HARQ resources are used to carry ACK / NACK status for DL transmission with predefined timing offset of K1 slots. The number of HARQ resources in PUCCH in an UL slot is based on number of DL scheduled users in a Transmit Time Interval (TTI) in a typical Frequency Division Duplexing (FDD) based configuration.

FIG. 2 illustrates known methods for configuring HARQ resources. This type of configuration is done in two stages. These stages comprise: 1) the RRC 110 (Next Generation Node B - gNB) configures a set of HARQ resources 114 during attachment of UE 112 and 2) a unique HARQ resource from the set is allocated in Downlink Control Information (DCI) 116.

As part of the PUCCH resource allocation procedure, in relation to the first step described above, the possible set of HARQ resources that are assigned to UE 112 in the RRC configuration message during UE attachment and exact HARQ resources are indicated in the PUCCH resource indicator field of DCI 1_0 / 1_1. The UE 112 will use this indicated resource to transmit the HARQ status information in the PUCCH for every PDSCH transmission.

FIG. 3 illustrates known methods for implementation of PUCCH transmission that results in significant interference in PUCCH transmission. It has been determined that significant degradation in DL throughput due to reception of PUCCH DTX (PUCCH Discontinuous Transmission) or NACK occurs when Inter-cell Interference (ICI) is present across the UEs. In the case illustrated in FIG. 3, UE 112 is connected to gNB 0 110 and UE 112' is connected to gNB 1 110'. Interference occurs between the PUCCH of UE 112 and UE 112'.

It has been observed that typically interference will occur in cell edge scenarios where Reference Signal Received Power (RSRP) of the received signal is below -100 dBm and the respective SINR is less than 0 dB.

FIG. 4 is a graph that provides information relating to PUCCH interference. The graph of FIG. 4 shows that approximately 40% Block Error Rate (BLER) is observed in the DL.

The graph shows that PUCCH interference caused by PUCCH resource collision is significant and that many NACKs are received when UEs use PUCCH resources and Cyclic shifts are allocated in the same Resource Band across cells. The percentage of PUCCH NACK / DTX detection for UEs is relatively high, which causes the DL throughput to be significantly degraded. To improve the throughput in the DL, it is very important to increase the PUCCH HARQ detection probability.

FIG. 5 illustrates known time and resource mapping of PUCCH HARQ resources for a 10 MHz bandwidth system. PUCCH Format 0 resources are used to transmit HARQ information. As per 3GPP specifications TS 38.213 section 9.2.1, PUCCH Format 0 resources are configured to the UE by the higher layers, where configuration parameters include *initialCyclicShift, nrOfSymbols, startingPRB* and *StartSymbol* indexes. The combination of these parameters indicates unique HARQ F0 resources, which are separated by Time / Frequency / Code domain. Typically, these higher layer configured parameters are sent to the UE 112 through an RRC message during UE attachment.

As shown in FIG. 5, the Start Resource Block index for HARQ F0 resources (RB #11) is maintained constant across sectors. The result of this is that it will cause severe interference in UL reception of PUCCH and degradation in overall system performance.

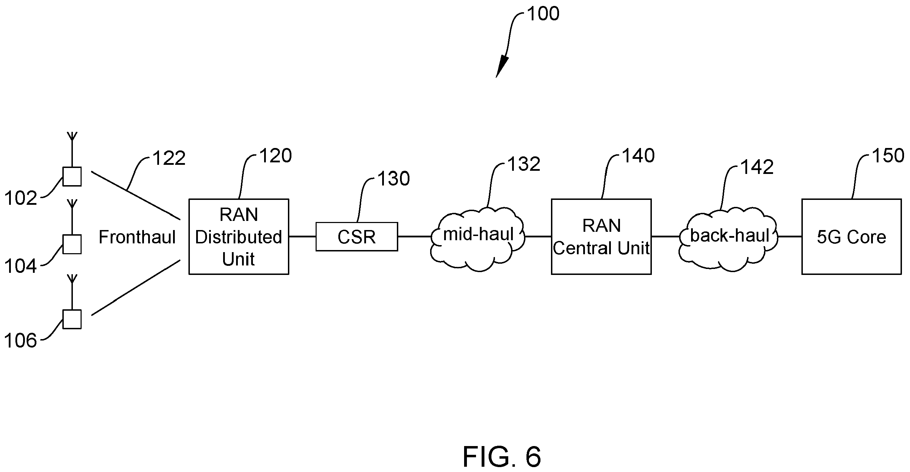

Referring now to FIG. 6, an Open Radio Access Network (O-RAN) system 100 is illustrated. At the remote cell site location 100 a Distributed Unit (DU) server 120 is provided along with a Cell Site Router (CSR) 130. The CSR 30 allows the DU server 120 to communicate with Control Unit (CU) server 140 via mid-haul connection 132. Mid-haul connection 132 can be a public Wide Area Network (WAN) or a leased line connection over the WAN. The CU server 140 communicates with 5G Core equipment 150 via back-haul connection 142.

The DU server 120 at remote cell site 100 communicates wirelessly with Radio Units (RUs) 112, 114, 116 via front-haul 122. It should be noted that while three RUs are illustrated, additional RUs may be connected to DU server 120.

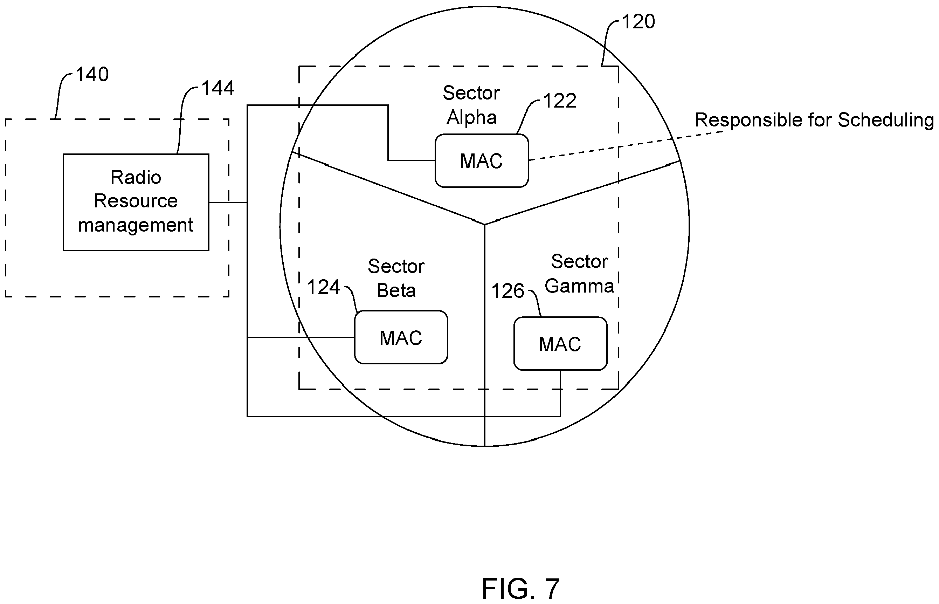

Turning to FIG. 7, a centralized Radio Resource Management (RRM) module 144 controlling resource allocation across sectors in a cell site is illustrated. The cellular / wireless communication system illustrated includes a group of cell sites 102, 104, 106 as per FIG. 6, where each cell site may include multiple sectors (e.g., 1, 2, 3, 4 or more sectors), communicating with the set of UE's.

The RRM may be in a Central Unit-Control Plane (CU-CP) 140 controlling the PUCCH HARQ resources Resource Block locations for the sectors in all sites.

A Media Access Control (MAC) Scheduler 122, 124, 126, in each sector is responsible to assign PUCCH HARQ resources through the resource indicator field in DCI to transmit acknowledgement status for PDSCH. Sitting just above the Physical layer, the MAC Scheduler 122, 124, 126 assigns bandwidth resources to UE and is responsible for deciding on how UL and DL channels are used by the eNodeB and the UEs of a cell. The MAC Scheduler 122, 124, 126 is part of a DU 120 that is used for controlling the multi-user dynamic physical resource allocation. It functions to fulfill the QoS targets for each Data Radio Bearer (DRB).

The system configuration according to the invention is directed to allocating PUCCH HARQ resources for the UE 112 that is separated by Frequency and/or Cyclic Shift for nearby sectors based on the Physical Cell Identity (PCI).

In one configuration, the system configures the different start Physical Resource Block index of PUCCH HARQ resources and/or Cyclic Shift Index to maintain the orthogonality across nearby sectors. HARQ resources are offset by 'K' number of Resource Blocks in frequency, where 'K' is number of HARQ F0 resources required as per PUCCH resource design. It is given in the below equation.

$$RB^i_{HARQ-FO,Start} = RB_{HARQ-F0-Base} + PCI^i \bmod N * K \qquad \text{Formula 1}$$

$RB^i_{HARQ-FO,Start}$ is the start Resource Block index of HARQ-F0 resources for a sector *i*. $PCI^i$ is the Physical Cell Identity (PCI) of a sector *i. mod* represents the modulo operation in Formula 1. mod operation returns the signed remainder of the division. For example, PCI mod N represents, remainder of PCI divided by N. *N* is the number of considered sectors for HARQ resource orthogonalization.

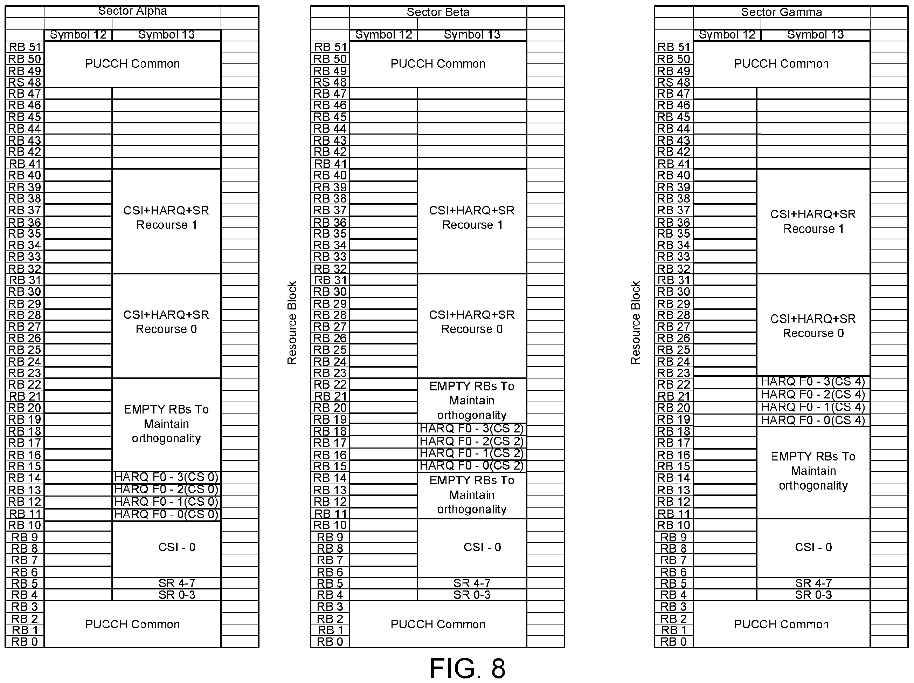

FIG. 8 illustrates PUCCH HARQ resources Resource Block and Cyclic index shifting for sectors Alpha, Beta and Gamma of FIG. 6 using the proposed method. RRM module 120 does not schedule any PUCCH resources on the same Resource Block with the same Cyclic Shift that would cause interference in PUCCH HARQ decoding in other sectors.

As illustrated in FIG. 8 for 10 MHz bandwidth operation, $RB_{HARQ-F0-Base}$ is fixed as Resource Block 11. PCI mod 3 = 0 for sector Alpha, hence there is no offset added for HARQ resources.

$RB^i_{HARQ-FO,Start} = RB_{HARQ-F0-Base}$ in this case. For Alpha, HARQ resources utilize Resource Blocks 11 - 14.

However, for Beta, there is an offset that is added shifting HARQ resources to utilize Resource Blocks 15 - 18. Likewise, for Gamma, there is another offset that is added shifting HARQ resources to utilize Resource Blocks 19 - 22.

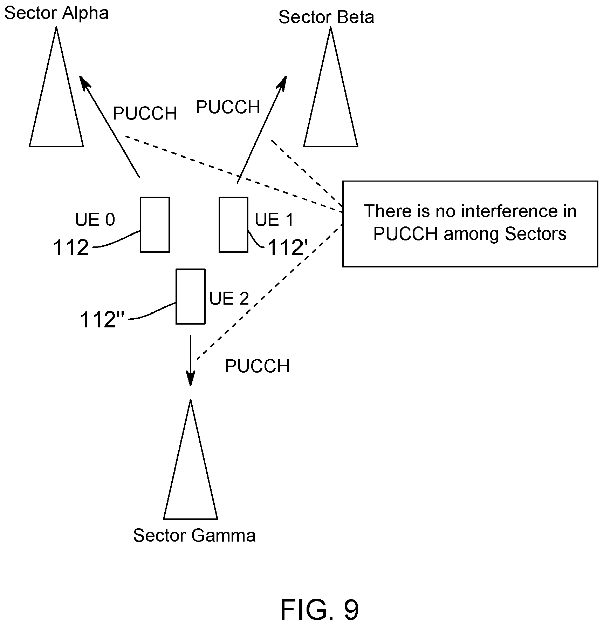

FIG. 9 illustrates the implementation of the proposed method in a cell site scenario, which is notably different than the method illustrated in FIG. 3. Using PUCCH HARQ frequency and Cyclic shift method, PUCCH resources in Sector Beta do not interfere with Sector Alpha, increases the PUCCH HARQ detection capability for UE, 112, 112', 112".

Each sector therefore creates no interference to uplink HARQ transmission in other sectors. A typical 3-sector site configuration is assumed in FIG. 9.

To help with operation and deployment, the configuration of sectors can be done automatically by using PCI%3 (where % is modulo operation). That is, if PCI%3 = 0, then configure PUCCH HARQ resources with RB index X and CS 0 and so on. This would reduce the operational and deployment complexity.

That is,

**Table 1**

| If PCI % 3 = 0 | Then configure PUCCH HARQ resources with RB index N, CS Index 0 |
| If PCI % 3 = 1 | Then configure PUCCH HARQ resources with RB index N+K, CS Index offset $\delta$ |
| If PCI % 3 = 2 | Then configure PUCCH HARQ resources with RB index N +2K, CS Index offset $2\delta$ |

Where K is the number of available HARQ F0 resources in a sector.

For example, configurations of PUCCH HARQ F0 resources for 10 MHz systems based on proposed solution is as follows,

**Table 2**

| If PCI % 3 = 0 | PUCCH HARQ RB start Index 11, CS 0 |
| If PCI % 3 = 1 | PUCCH HARQ RB start Index 15, CS 2 |
| If PCI % 3 = 2 | PUCCH HARQ RB start Index 19, CS 4 |

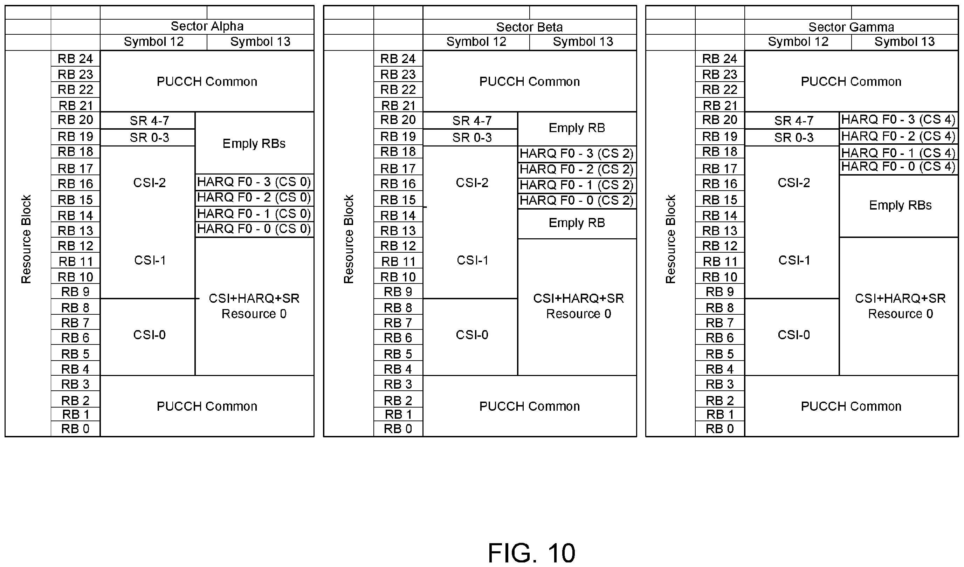

FIG. 10 illustrates HARQ resource assignment using the proposed method in connection with a 5 MHz system. As can be seen, for a carrier with a 5 MHz bandwidth, 2 Orthogonal Frequency Division Multiplexing (OFDM) symbols for PUCCH resource transmission are required due to less availability of resources.

The system configures HARQ F0 resource with frequency offset of 2 Resource Blocks and Cyclic shift offset of 2 for different sectors for 5 MHz based systems.

It should be noted that, while various functions and methods have been described and presented in a sequence of steps, the sequence has been provided merely as an illustration of one advantageous embodiment, and that it is not necessary to perform these functions in the specific order illustrated. It is further contemplated that any of these steps may be moved and/or combined relative to any of the other steps. In addition, it is still further contemplated that it may be advantageous, depending upon the application, to utilize all or any portion of the functions described herein.

The system and method can further be applied to the following situations:

1) For higher UL bandwidth transmissions, the frequency offset between PUCCH HARQ resources can be multiples of the parameter K. It depends on the available Bandwidth for PUCCH transmissions.

2) The concept can be utilized in PUCCH long format transmission for allocating HARQ resources orthogonally across sectors.

3) If there are more than 1 OFDM symbols reserved for PUCCH transmission, orthogonality across the PUCCH HARQ resources can be maintained across the symbols with / without frequency shifting.

4) Frequency offset across the PUCCH resource depends on the deployment scenarios of sectors within a site and interference pattern.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

**Claims**

**1.** A Radio Access Network (RAN) system comprising:

a radio unit (RU) coupled to a plurality of user equipment (UE), the RU having a plurality of sectors;

a radio resource controller (RRC) in a control unit (CU) server controlling physical uplink control channel (PUCCH) resources for the plurality of sectors;

a media access control (MAC) scheduler for each of the plurality of sectors allocating resources for PUCCH hybrid automatic repeat request (HARQ) transmissions in an orthogonal manner, which are separated in time, frequency or cyclic shift to minimize the inter-carrier interference across the plurality of sectors.

2. The RAN system of claim 1, wherein the allocation of resources is selected from the group consisting of:

configuring a physical resource block index with an offset; or
configuring a cyclic shift index for each sector based on physical cell identity (PCI).

3. The RAN system of claim 1, wherein said RU comprises a plurality of RUs each RU having a plurality of sectors, said RRC controls PUCCH resources for all of the plurality of sectors, and wherein a MAC scheduler is provided for each the plurality of sectors where each MAC scheduler allocates the resources for PUCCH HARQ transmissions in an orthogonal manner across the plurality of sectors.

4. The RAN system of claim 3, wherein when the plurality of sectors comprises three sectors, said RRC configures different PUCCH resources separated by frequency and cyclic shift to the three sectors.

5. The RAN system of claim 4, wherein the system comprises a 10MHz system and the three sectors comprise first, second and third sectors.

6. The RAN system of claim 5, wherein configurations of PUCCH HARQ F0 resources,

starts at index 11 for the first sector;
starts at index 15 for the second sector; and
starts at index 19 for the third sector.

7. The RAN system of claim 4, wherein the system comprises a 5MHz system and the three sectors comprise first, second and third sectors.

8. The RAN system of claim 7, wherein configurations of PUCCH HARQ F0 resources,

starts at index 13 for the first sector;
starts at index 15 for the second sector; and
starts at index 17 for the third sector.

9. The RAN system of claim 1, wherein the RRC configures different PUCCH HARQ resources separated in frequency or cyclic shift to each sector in a RU.

10. The RAN system of claim 1, wherein said RRC does not configure PUCCH HARQ resources on the same frequency or cyclic shift for adjacent sectors to avoid causing interference in uplink HARQ detection.

11. The RAN system of claim 1, wherein said RRC configures an offset for HARQ resource blocks (RBs) based on physical cell identity (PCI) that is based on the overall available PUCCH resources in a system.

12. The RAN system of claim 1, wherein said RRC uses physical cell identity (PCI) to automatically configure frequency positions of PUCCH HARQ resources for each sector according to the following equation:

$$RB^i_{HARQ-FO,Start} = RB_{HARQ-F0-Base} + PCI^i \bmod N * K$$

where $RB^i_{HARQ-FO,Start}$ is a start resource block index of HARQ-F0 resources for a sector *i, PCI^i* is a PCI of a sector *i, mod* is a modulo operation that designates a remainder of *PCI^i* divided by *N,* where *N* is a number of considered sectors for HARQ resource orthogonalization.

**13.** The RAN system of claim 1, wherein said MAC Scheduler in each of the plurality of sectors assigns PUCCH HARQ resources through a resource indicator field in downlink control information (DCI) to transmit acknowledgement status for physical downlink shared channel (PDSCH).

**14.** The RAN system of claim 1, wherein the system comprises a plurality of RUs where each RU has an RRC; wherein the allocation of resources comprises using one symbol x in a slot reserved for PUCCH HARQ transmission, which symbol will not be used for PUSCH in any RU and that symbol will be shared among adjacent RUs.

**15.** The RAN system of claim 14 wherein the plurality of RUs comprises Cell 0, Cell 1, and Cell 2, and wherein,

Cell 0 uses symbol x in slot 0,
Cell 1 uses symbol x in slot 1, and
Cell 2 uses symbol x in slot 2.

EP 4 462 714 A1

| gNB (Downlink slots) | | Slot N-4 | Slot N-3 | Slot N-2 | Slot N-1 | Slot N | Slot N+1 | Slot N+2 | Slot N+3 | Slot N+4 | Slot N+5 | Slot N+6 |
|---|---|---|---|---|---|---|---|---|---|---|---|---|
| | | | | | | | | | | | | |
| | | | | DL Transmission | | | | HARQ Status | | | | |
| | | | | | | | | | | | | |
| UE (Uplink Slots) | | Slot N-4 | Slot N-3 | Slot N-2 | Slot N-1 | Slot N | Slot N+1 | Slot N+2 | Slot N+3 | Slot N+4 | Slot N+5 | Slot N+6 |
| | | | | | | | | | | | | |
| | | | | | | | K1 Slots Delay | | | | | |

102

104

# FIG. 1

Prior Art

| 112 | | PUCCH Resource Configuration Procedure | | | | | 110 |
|---|---|---|---|---|---|---|---|
| | **UE** | | | | | | **gNB** |

114

RRC configuration message

(Set of PUCCH HARQ resources assigned)

Downlink Data

116

Downlink Control Information (DCI)

(PUCCH HARQ Resources Indication)

Downlink Data Transmission

HARQ Status Indication

## FIG. 2

<u>Prior Art</u>

gNB 0 — 110

gNB 1 — 110'

Interference between
PUCCH of UE 0 and UE 1

PUCCH

PUCCH

PDSCH

PDSCH

UE 0

UE 1

112

112'

Prior Art

FIG. 3

EP 4 462 714 A1

FIG. 4

Prior Art

| | Sector 0 | | | Sector 1 | | | Sector 2 | |
|---|---|---|---|---|---|---|---|---|
| | Symbol 12 | Symbol 13 | | Symbol 12 | Symbol 13 | | Symbol 12 | Symbol 13 |
| RB 51 | PUCCH Common | | RB 51 | PUCCH Common | | RS 51 | PUCCH Common | |
| RB 50 | | | RS 50 | | | RS 50 | | |
| RB 49 | | | RS 49 | | | RS 49 | | |
| RS 48 | | | RS 48 | | | RS 48 | | |
| RB 47 | | NOT Utilized | RS 47 | | NOT Utilized | RS 47 | | NOT Utilized |
| RB 46 | | | RS 46 | | | RS 46 | | |
| RB 45 | | | RS 45 | | | RS 45 | | |
| RB 44 | | | RS 44 | | | RS 44 | | |
| ⋮ | | | ⋮ | | | ⋮ | | |
| RB 34 | | | RS 34 | | | RS 34 | | |
| RB 33 | | | RS 33 | | | RS 33 | | |
| RB 32 | | CSI+HARQ+SR Recourse 1 | RS 32 | | CSI+HARQ+SR Recourse 1 | RS 32 | | CSI+HARQ+SR Recourse 1 |
| RB 31 | | | RS 31 | | | RS 31 | | |
| RB 30 | | | RS 30 | | | RS 30 | | |
| RB 29 | | | RS 29 | | | RS 29 | | |
| RB 28 | | | RS 28 | | | RS 28 | | |
| RB 27 | | | RS 27 | | | RS 27 | | |
| RB 26 | | | RS 26 | | | RS 26 | | |
| RB 25 | | | RS 25 | | | RS 25 | | |
| RB 24 | | | RS 24 | | | RS 24 | | |
| RB 23 | | CSI+HARQ+SR Recourse 0 | RS 23 | | CSI+HARQ+SR Recourse 0 | RS 23 | | CSI+HARQ+SR Recourse 0 |
| RB 22 | | | RS 22 | | | RS 22 | | |
| RB 21 | | | RS 21 | | | RS 21 | | |
| RB 20 | | | RS 20 | | | RS 20 | | |
| RB 19 | | | RS 19 | | | RS 19 | | |
| RB 18 | | | RS 18 | | | RS 18 | | |
| RB 17 | | | RS 17 | | | RS 17 | | |
| RB 16 | | | RS 16 | | | RS 16 | | |
| RB 15 | | | RS 15 | | | RS 15 | | |
| RB 14 | | HARQ F0 - 3 | RS 14 | | HARQ F0 - 3 | RS 14 | | HARQ F0 - 3 |
| RB 13 | | HARQ F0 - 2 | RS 13 | | HARQ F0 - 2 | RS 13 | | HARQ F0 - 2 |
| RB 12 | | HARQ F0 - 1 | RS 12 | | HARQ F0 - 1 | RS 12 | | HARQ F0 - 1 |
| RB 11 | | HARQ F0 - 0 | RS 11 | | HARQ F0 - 0 | RS 11 | | HARQ F0 - 0 |
| RB 10 | | CSI - 0 | RS 10 | | CSI - 0 | RS 10 | | CSI - 0 |
| RB 9 | | | RS 9 | | | RS 9 | | |
| RB 8 | | | RS 8 | | | RS 8 | | |
| RB 7 | | | RS 7 | | | RS 7 | | |
| RB 6 | | | RS 6 | | | RS 6 | | |
| RB 5 | | SR 4-7 | RS 5 | | SR 4-7 | RS 5 | | SR 4-7 |
| RB 4 | | SR 0-3 | RS 4 | | SR 0-3 | RS 4 | | SR 0-3 |
| RB 3 | PUCCH Common | | RS 3 | PUCCH Common | | RS 3 | PUCCH Common | |
| RB 2 | | | RS 2 | | | RS 2 | | |
| RB 1 | | | RS 1 | | | RS 1 | | |
| RB 0 | | | RS 0 | | | RS 0 | | |

## FIG. 5

Prior Art

100

102 — 104 — 106

122 Fronthaul

RAN Distributed Unit 120

CSR 130

mid-haul 132

RAN Central Unit 140

back-haul 142

5G Core 150

FIG. 6

FIG. 7

**Sector Alpha**

| Resource Block | Symbol 12 | Symbol 13 |
|---|---|---|
| RB 51 – RB 47 | PUCCH Common | PUCCH Common |
| | CSI+HARQ+SR Recourse 1 | |
| | CSI+HARQ+SR Recourse 0 | |
| | EMPTY RBs To Maintain orthogonality | |
| | HARQ F0 - 3(CS 0) | |
| | HARQ F0 - 2(CS 0) | |
| | HARQ F0 - 1(CS 0) | |
| | HARQ F0 - 0(CS 0) | |
| | CSI - 0 | |
| | SR 4-7 | |
| | SR 0-3 | |
| RB ... – RB 0 | PUCCH Common | PUCCH Common |

**Sector Beta**

| Resource Block | Symbol 12 | Symbol 13 |
|---|---|---|
| RB 51 – RB 47 | PUCCH Common | PUCCH Common |
| | CSI+HARQ+SR Recourse 1 | |
| | CSI+HARQ+SR Recourse 0 | |
| | EMPTY RBs To Maintain orthogonality | |
| | HARQ F0 - 3(CS 2) | |
| | HARQ F0 - 2(CS 2) | |
| | HARQ F0 - 1(CS 2) | |
| | HARQ F0 - 0(CS 2) | |
| | EMPTY RBs To Maintain orthogonality | |
| | CSI - 0 | |
| | SR 4-7 | |
| | SR 0-3 | |
| RB ... – RB 0 | PUCCH Common | PUCCH Common |

**Sector Gamma**

| Resource Block | Symbol 12 | Symbol 13 |
|---|---|---|
| RB 51 – RB 47 | PUCCH Common | PUCCH Common |
| | CSI+HARQ+SR Recourse 1 | |
| | CSI+HARQ+SR Recourse 0 | |
| | HARQ F0 - 3(CS 4) | |
| | HARQ F0 - 2(CS 4) | |
| | HARQ F0 - 1(CS 4) | |
| | HARQ F0 - 0(CS 4) | |
| | EMPTY RBs To Maintain orthogonality | |
| | CSI - 0 | |
| | SR 4-7 | |
| | SR 0-3 | |
| RB ... – RB 0 | PUCCH Common | PUCCH Common |

FIG. 8

Sector Alpha

Sector Beta

PUCCH PUCCH

UE 0

112

UE 1

112'

There is no interference in
PUCCH among Sectors

112"

UE 2

PUCCH

Sector Gamma

FIG. 9

EP 4 462 714 A1

## Sector Alpha

| Resource Block | Symbol 12 | Symbol 13 |
|---|---|---|
| RB 24 | PUCCH Common | |
| RB 23 | PUCCH Common | |
| RB 22 | PUCCH Common | |
| RB 21 | PUCCH Common | |
| RB 20 | SR 4-7 | Emply RBs |
| RB 19 | SR 0-3 | Emply RBs |
| RB 18 | CSI-2 | Emply RBs |
| RB 17 | CSI-2 | Emply RBs |
| RB 16 | CSI-2 | HARQ F0 - 3 (CS 0) |
| RB 15 | CSI-2 | HARQ F0 - 2 (CS 0) |
| RB 14 | CSI-2 | HARQ F0 - 1 (CS 0) |
| RB 13 | CSI-2 | HARQ F0 - 0 (CS 0) |
| RB 12 | CSI-1 | CSI+HARQ+SR Resource 0 |
| RB 11 | CSI-1 | CSI+HARQ+SR Resource 0 |
| RB 10 | CSI-1 | CSI+HARQ+SR Resource 0 |
| RB 9 | CSI-1 | CSI+HARQ+SR Resource 0 |
| RB 8 | CSI-0 | CSI+HARQ+SR Resource 0 |
| RB 7 | CSI-0 | CSI+HARQ+SR Resource 0 |
| RB 6 | CSI-0 | CSI+HARQ+SR Resource 0 |
| RB 5 | CSI-0 | CSI+HARQ+SR Resource 0 |
| RB 4 | CSI-0 | CSI+HARQ+SR Resource 0 |
| RB 3 | PUCCH Common | |
| RB 2 | PUCCH Common | |
| RB 1 | PUCCH Common | |
| RB 0 | PUCCH Common | |

## Sector Beta

| Resource Block | Symbol 12 | Symbol 13 |
|---|---|---|
| RB 24 | PUCCH Common | |
| RB 23 | PUCCH Common | |
| RB 22 | PUCCH Common | |
| RB 21 | PUCCH Common | |
| RB 20 | SR 4-7 | Emply RB |
| RB 19 | SR 0-3 | Emply RB |
| RB 18 | CSI-2 | HARQ F0 - 3 (CS 2) |
| RB 17 | CSI-2 | HARQ F0 - 2 (CS 2) |
| RB 16 | CSI-2 | HARQ F0 - 1 (CS 2) |
| RB 15 | CSI-2 | HARQ F0 - 0 (CS 2) |
| RB 14 | CSI-2 | Emply RB |
| RB 13 | CSI-2 | Emply RB |
| RB 12 | CSI-1 | CSI+HARQ+SR Resource 0 |
| RB 11 | CSI-1 | CSI+HARQ+SR Resource 0 |
| RB 10 | CSI-1 | CSI+HARQ+SR Resource 0 |
| RB 9 | CSI-1 | CSI+HARQ+SR Resource 0 |
| RB 8 | CSI-0 | CSI+HARQ+SR Resource 0 |
| RB 7 | CSI-0 | CSI+HARQ+SR Resource 0 |
| RB 6 | CSI-0 | CSI+HARQ+SR Resource 0 |
| RB 5 | CSI-0 | CSI+HARQ+SR Resource 0 |
| RB 4 | CSI-0 | CSI+HARQ+SR Resource 0 |
| RB 3 | PUCCH Common | |
| RB 2 | PUCCH Common | |
| RB 1 | PUCCH Common | |
| RB 0 | PUCCH Common | |

## Sector Gamma

| Resource Block | Symbol 12 | Symbol 13 |
|---|---|---|
| RB 24 | PUCCH Common | |
| RB 23 | PUCCH Common | |
| RB 22 | PUCCH Common | |
| RB 21 | PUCCH Common | |
| RB 20 | SR 4-7 | HARQ F0 - 3 (CS 4) |
| RB 19 | SR 0-3 | HARQ F0 - 2 (CS 4) |
| RB 18 | CSI-2 | HARQ F0 - 1 (CS 4) |
| RB 17 | CSI-2 | HARQ F0 - 0 (CS 4) |
| RB 16 | CSI-2 | Emply RBs |
| RB 15 | CSI-2 | Emply RBs |
| RB 14 | CSI-2 | Emply RBs |
| RB 13 | CSI-2 | Emply RBs |
| RB 12 | CSI-1 | CSI+HARQ+SR Resource 0 |
| RB 11 | CSI-1 | CSI+HARQ+SR Resource 0 |
| RB 10 | CSI-1 | CSI+HARQ+SR Resource 0 |
| RB 9 | CSI-1 | CSI+HARQ+SR Resource 0 |
| RB 8 | CSI-0 | CSI+HARQ+SR Resource 0 |
| RB 7 | CSI-0 | CSI+HARQ+SR Resource 0 |
| RB 6 | CSI-0 | CSI+HARQ+SR Resource 0 |
| RB 5 | CSI-0 | CSI+HARQ+SR Resource 0 |
| RB 4 | CSI-0 | CSI+HARQ+SR Resource 0 |
| RB 3 | PUCCH Common | |
| RB 2 | PUCCH Common | |
| RB 1 | PUCCH Common | |
| RB 0 | PUCCH Common | |

FIG. 10

**EP 4 462 714 A1**

Europäisches
Patentamt
European
Patent Office
Office européen
des brevets

# EUROPEAN SEARCH REPORT

Application Number

EP 24 17 4037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/067680 A1 (NAYEB NAZAR SHAHROKH [US] ET AL) 27 February 2020 (2020-02-27) * page 22, paragraph [32] - page 33, paragraph [167]; figures 1A, 1C, 1D * ----- | 1-15 | INV. H04L5/00 H04L1/1812 H04L1/1829 |
| X | US 2013/148617 A1 (PARK DONG HYUN [KR] ET AL) 13 June 2013 (2013-06-13) * page 18, paragraph [45] - page 24, paragraph [140]; figure 1; table 5 * ----- | 1-15 | |

TECHNICAL FIELDS
SEARCHED      (IPC)

H04L

The present search report has been drawn up for all claims

| Place of search | Date of completion of the search | Examiner |
|---|---|---|
| The Hague | 25 September 2024 | Gökceli, Selahattin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................................
& : member of the same patent family, corresponding
document

EPO FORM 1503 03.82 (P04C01)

20

## ANNEX TO THE EUROPEAN SEARCH REPORT
## ON EUROPEAN PATENT APPLICATION NO.

EP 24 17 4037

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2024

| Patent document cited in search report | Publication date | Patent family member(s) | Publication date |
|---|---|---|---|
| US 2020067680 A1 | 27-02-2020 | BR 112019023027 A2 | 11-08-2020 |
| | | CN 110637430 A | 31-12-2019 |
| | | CN 116132000 A | 16-05-2023 |
| | | EP 3619855 A1 | 11-03-2020 |
| | | JP 2020520147 A | 02-07-2020 |
| | | JP 2023054357 A | 13-04-2023 |
| | | KR 20200012842 A | 05-02-2020 |
| | | KR 20220059555 A | 10-05-2022 |
| | | KR 20240027897 A | 04-03-2024 |
| | | RU 2019137555 A | 24-05-2021 |
| | | TW 201906353 A | 01-02-2019 |
| | | US 2020067680 A1 | 27-02-2020 |
| | | US 2023336316 A1 | 19-10-2023 |
| | | WO 2018204347 A1 | 08-11-2018 |
| US 2013148617 A1 | 13-06-2013 | KR 20120016561 A | 24-02-2012 |
| | | US 2013148617 A1 | 13-06-2013 |
| | | WO 2012023741 A2 | 23-02-2012 |

For more details about this annex : see Official Journal of the European Patent Office, No. 12/82

EPO FORM P0459